# EUROPEAN PATENT SPECIFICATION

(11) **EP 3 715 733 B1**
(45) Date of publication and mention of the grant of the patent: **30.08.2023**
(21) Application number: 19798156.6
(22) Date of filing: 22.10.2019
(51) Int. Cl.: F24F 1/0073, B01D 41/04, F24F 13/28, F24F 1/0057, F24F 13/20

(54) **AIR-CONDITIONER INDOOR UNIT AND AIR CONDITIONER**
INNENRAUMEINHEIT EINER KLIMAANLAGE UND KLIMAANLAGE
SECTION INTÉRIEURE DE CLIMATISEUR ET CLIMATISEUR

(30) Priority: 31.01.2019 CN 201910100987; 31.01.2019 CN 201920179237 U; 13.03.2019 CN 201920321931 U
(43) Date of publication of application: 30.09.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: LU, Gen, Foshan, Guangdong 528311 (CN); LIU, Xing, Foshan, Guangdong 528311 (CN); SUN, Zecheng, Foshan, Guangdong 528311 (CN); PI, Shuyang, Foshan, Guangdong 528311 (CN)
(74) Representative: Lam, Alvin
(86) International application number: PCT/CN2019/112430
(87) International publication number: WO 2020/155675

(56) References cited:
- EP-A1- 3 093 563
- WO-A1-2012/096121
- WO-A1-2016/143004
- CN-A- 101 576 287
- CN-A- 109 668 217
- CN-U- 203 848 475
- CN-U- 204 853 892
- JP-A- 2015 188 851
- JP-A- 2019 007 653

## Description

### CROSS REFERENCE TO RELATED DISCLOSURE

### TECHNICAL FIELD

The present invention relates to the technical field of air conditioners, in particular to an air conditioner indoor unit and an air conditioner.

### BACKGROUND

The cleaning device is arranged in the indoor unit to clean the filter screen. The electrical wires for connecting the cleaning assembly and the electric control box need to be arranged in the the indoor unit. In related arts, the electrical wires need to be arranged on the chassis of the indoor unit. However, other electrical wires for controlling the movement of the wind deflector are also arranged on the chassis. It is prone to cause a confusion when the two kinds of electrical wires are both arranged on the chassis. A large space is required for arranging the two kinds of electrical wires. Thus the demands on design of the wiring structure is high.

The aforementioned merely provide background information of the technical solution of the present invention, and does not necessarily admit that the aforementioned constitutes the prior art.

### SUMMARY

The main purpose of the present invention is to provide an air conditioner indoor unit and an air conditioner, aiming at simplifying the electrical wire arrangement of the cleaning assembly.

In order to achieve the above purpose, an indoor unit according to claim 1 is provided. In particular, the indoor unit includes:
an electric control box;
a cleaning assembly including: a filter screen rail module; and a cleaning module configured to drive a filter screen to move on the filter screen rail module to clean the filter screen, and including an electrical wire connecting end; and
an electrical wire arranged on the cleaning module and the filter screen rail module. One end of the electrical wire is connected to the electrical wire connecting end, and the other end of the electrical wire is connected to the electric control box.

In an embodiment of the present invention, the first electrical wire section is arranged along a height direction of the cleaning module and/or the second electrical wire section is arranged along a length direction of the filter screen rail module.

In an embodiment of the present invention, the second electrical wire section arranged at the filter screen rail module is arranged at an outer side and a front side of the cleaning module. The indoor unit is configured so that when it is hanged on a wall, and the front side of the cleaning module is away from the wall. The outer side of the cleaning module is away from a heat exchanger of the indoor unit.

In an embodiment of the present invention, the indoor unit comprises a first clamping line member at the outer side of the cleaning module and a second clamping line member at the front side of the cleaning module. The first electrical wire section is penetrated through the first clamping line member and the second clamping line member.

In an embodiment of the present invention, the second clamping line member is adjacent to the filter screen rail module, to force the first electrical wire section and the second electrical wire section to bend.

In an embodiment of the present invention, the first clamping line member defines a first through hole, and the first electrical wire section is penetrated through the first through hole; and/or the second clamping line member defines a second through hole, and the first electrical wire section is penetrated through the second through hole.

In an embodiment of the present invention, the indoor unit comprises a third clamping line member at the front side of the cleaning module, and the second clamping line member and the third clamping line member are arranged at intervals from top to bottom along a height direction of the cleaning module. The first electrical wire section is further penetrated through the third clamping line member.

In an embodiment of the present invention, the third clamping line member defines an electrical wire penetrating cavity and an opening communicating with the electrical wire penetrating cavity, and a portion of the first electrical wire section is inserted into the electrical wire penetrating cavity through the opening.

According to the invention, the electrical wire includes: a first electrical wire section arranged at the cleaning module and a second electrical wire section arranged at the filter screen rail module.

The second electrical wire section is arranged at the front side of the filter screen rail module. The indoor unit is configured so that when it is hanged on a wall, the front side of the filter screen rail module is away from the wall.

According to the invention, the clamping line member defines: a electrical wire penetrating groove arranged along a length direction of the filter screen rail module. And an opening communicating with the electrical wire penetrating groove . At least a part of the second electrical wire section is inserted into the electrical wire penetrating groove through the opening.

In an embodiment of the present invention, the clamping line member includes: at least two first limit elements, and a second limit element. The two first limit elements and the second limit element are alternatively at intervals. The electrical wire penetrating groove and the opening connected to the electrical wire penetrating groove are defined between each first limit element and each second limit element and the electrical wire penetrating groove is connected to the opening and the indoor unit is configured so that at least a part of the second electrical wire section can be inserted into the electrical wire penetrating groove through the opening.

In an embodiment of the present invention, second limit elements are arranged along the length direction of the filter screen rail module. At least a part of the second electrical wire section is supported by the second limit element.

In an embodiment of the present invention, the cleaning module is connected to one end of the filter screen rail module, and the electrical control box is adjacent to another end of the filter screen rail module; and/or the indoor unit further includes a face frame covering the cleaning assembly 200, and the cleaning assembly is detachable from the face frame.

The present invention also provides an air conditioner including an air conditioner outdoor unit and the indoor unit of any of the above embodiments.

The technical solution of the present invention is used to arrange the electrical wires for connecting the cleaning assembly and the electric control box on the cleaning module and the filter screen rail module. That is the electrical wire is arranged along the cleaning module and the filter screen rail module. Thereby the wiring space of the chassis of the indoor unit isn't occupied. The electrical wire arrangement of the cleaning assembly is simplified.

### BRIEF DESCRIPTION OF THE DRAWINGS

The technical solutions of the embodiments of the present invention will be clearly and completely described in the following with reference to the accompanying drawings. It is obvious that the embodiments to be described are only a part rather than all of the embodiments of the present invention, which is defined in the claims.
FIG. 1 is a schematic view of an electrical wire configured in a cleaning assembly according to an embodiment of the present invention;
FIG 2 is an enlarged view of the dotted portion in the figure;
FIG 3 is a schematic structural view of the electrical wire configured on a cleaning assembly in an embodiment of the present invention;
FIG 4 is a schematic structural view of a cleaning assembly according to an embodiment of the present invention;
FIG 5 is an enlarged view of labeled A according to FIG. 4;
FIG 6 is an enlarged view of labeled B according to FIG. 4;
FIG 7 is a schematic structural view of the first electrical wire and the second electrical wire fixed on the air intake grill after being connected according to an embodiment not part of the present invention;
FIG 8 an enlarged view of the dotted portion according to FIG 7;
FIG 9 is an exploded view of the first electrical wire, the second electrical wire, and the air intake grill in an embodiment not part of the present invention;
FIG 10 is an exploded view of the air intake grill and the connector according to an embodiment not part of the present invention;
FIG 11 an enlarged view of the dotted portion according to FIG 10.

Description of reference numerals

**Table 1**

| Reference Numeral | Name | Reference Numeral | Name |
|---|---|---|---|
| 200 | Cleaning assembly | 220 | Filter screen rail module |
| 210 | Cleaning module | 221 | Fourth clamping line member |
| 211 | First clamping line member | 2211 | First limit element |
| 2111 | First through hole | 2212 | Second limit element |
| 212 | Second clamping line member | 2213 | Electrical wire penetrating groove |
| 2121 | Second through hole | 2214 | Opening |
| 213 | Third clamping line member | A400 | Electrical wire |
| 2131 | Electrical wire penetrating cavity | A410 | First electrical wire section |
| 2132 | Opening | A420 | Second electrical wire section |
| 110 | First electrical wire | 4101 | Connector limit element |
| 120 | Second electrical wire | 4102 | Non-connector limit element |
| B200 | Connector | 420 | Second limit element |
| B210 | First connecting terminal | 421 | Bearing element |
| B220 | Second connecting terminal | 4211 | First bearing element |
| 300 | Air intake grill | 4212 | Second bearing element |
| 401 | Receiving cavity | 422 | Supporting member |
| 402 | Opening | 4221 | First supporting member |
| 410 | First limit element | 4222 | Second supporting member |
| 411 | Limiting rib | | |

The implementation, functional characteristics and advantages of the present invention will be further described with reference to the attached drawings in combination with embodiments.

### DETAILED DESCRIPTION OF THE EMBODIMENTS

As following, the technical solution of the invention will be described clearly and completely with reference to the drawings in the embodiment of the present invention. Obviously, the described embodiment is only one embodiment of the present invention, not all of the embodiments which can be derived from the claims.

It should be noted that all directional indicators ( such as upper, lower, left, right, front, rear, etc.) in the embodiment of the present invention are only used to explain the relative positional relationship, movement, etc. between various components under a certain specific posture (referring to the drawings). If the specific posture changes, the directional indicator will also change accordingly.

In the present invention, the terms "connected" and "fixed" etc. should be understood in a broad sense, otherwise specified and defined. For example, "fixed" can be a fixed connection, a detachable connection, or forming a part integrally. It can be a direct connection or an indirect connection through an intermediate medium; and it can be the communication between interior of two elements or the interaction between two elements, otherwise specifically defined. For those ordinary skilled in the art, the specific meanings of the aforementioned terms in the present invention can be understood according to practical conditions.

In addition, the technical solutions between the various embodiments of the invention may be combined with each other, but must be based on what one of ordinary skill in the art can achieve. When the combination of technical solutions is contradictory or impossible to achieve, it should be considered that the combination of such technical solutions does not exist. The scope of protection is defined by the claims.

The present invention relates to an air conditioner indoor unit.

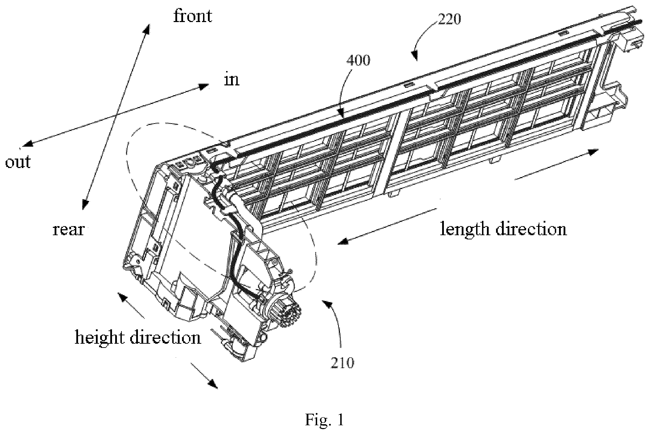

In an embodiment of the present invention, referring to FIG 1 to FIG. 3, the indoor unit includes the features of claim 1, and in particular:
an electric control box (not shown);
a cleaning assembly 200 including: a cleaning module 210 configured to drive a filter screen to move on the filter screen rail module 220 to clean the filter screen. And including an electrical wire connecting end; and
an electrical wire A400 arranged on the cleaning module 210 and the filter screen rail module 220. One end of the electrical wire A400 is connected to the electrical wire connecting end, and the other end of the electrical wire A400 is connected to the electric control box.

In this embodiment, it can be understood that the electric control box is configured with a circuit board therein, which is an important module for controlling the indoor unit. The cleaning assembly 200 is an assembly for driving and cleaning the filter screen. That is, the air is circulated in the process of operating the conditioner indoor unit for air circulation. The air needs to be filter screened through the filter screen after entering the indoor unit and before passing through the heat exchanger. After the indoor unit is used for a long time, the filter screen become dirty. So the cleaning of the filter screen is achieved by the cleaning assembly 200. The process of cleaning the filter screen 200 by the cleaning assembly 200 is as follows: firstly, the filter screen is driven to run in the cleaning assembly 200. The cleaning of the filter screen is realized in the process of operation. The specific structure of the cleaning assembly 200 can be the same as disclosed in other patent disclosures of the present applicant before the filing date of the present disclosure. In order to achieve that the cleaning assembly 200 is controlled, it is necessary to connect the electric control box and the cleaning assembly 200 through the electrical wire A400 for transmitting electric power and/or signals.

For example, the cleaning module 210 is configured with a driving structure for driving the movement of the filter screen, a cleaning structure for cleaning the filter screen, a water pump, and a water cavity. The condensed water generated by the indoor unit is pumped by the water pump to the water cavity. The movement of the filter screen is driven by the driving structure which cleaning the filter screen. The filter screen rail module is configured with a corresponding rail. The filter screen can be moved in the rail. In general, the electrical wire A400 is required to connect with a water pump and a drive structure of the cleaning module 210. So the electrical wire A400 is divided into two sections. The first section A410 thereof is configured at the cleaning module 210 and the other section A420 thereof is configured at the filter screen rail module 220. That is, the electrical wire A400 is configured along the cleaning module 210 and the filter screen rail module 220 to avoid that the space of other electrical wires is occupied for the arrangement of the electrical wire A400 on the chassis of the indoor unit. An overly messy situation with other electrical wires is avoided. Thereby the arrangement of the electrical wire A400 that is connecting the cleaning assembly 200 is simplified.

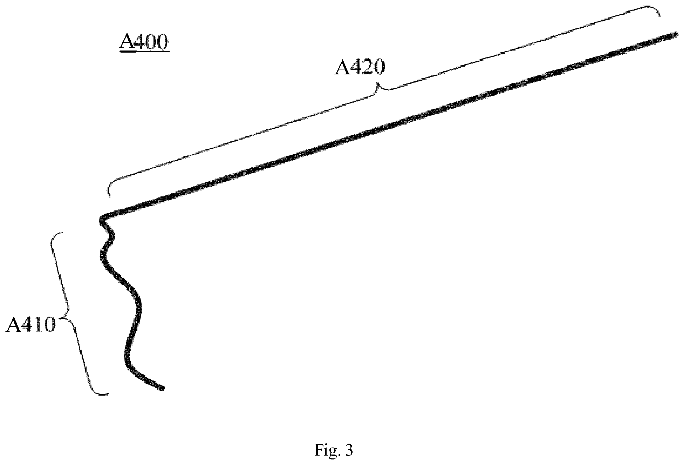

In one embodiment of the present invention, referring to FIG 3 to FIG 5, the electrical wire A400 includes: a first electrical wire section A410 arranged at the cleaning module 210. And a second electrical wire section A420 arranged at the filter screen rail module 220; and

the first electrical wire section A410 is arranged along a height direction of the cleaning module 210 and/or the second electrical wire section A420 is arranged along a length direction of the filter screen rail module 220.

In this embodiment, in general, the cleaning module 210 and the filter screen rail module 220 are set to intersect to fully utilize the internal space of the indoor unit so that the first electrical wire section A410 is configured along the height direction of the cleaning module 210. The second electrical wire section A420 is configured along the length of the filter screen rail module 220, thus the length of the electrical wire A400 is minimized.

In an embodiment of the present invention, referring to FIG 3 to FIG 5, the electrical wire A400 includes: a first electrical wire section A410 arranged at the cleaning module 210 and a second electrical wire section A420 arranged at the filter screen rail module 220.

The first electrical wire section A410 is arranged at an outer side and a front side of the cleaning module 210. The indoor unit is hanged on a wall, and the front side of the cleaning module 210 is away from the wall. The outer side of the cleaning module 210 is away from a heat exchanger of the indoor unit.

In the present embodiment, in order to realize the arrangement of the assemblies in the cleaning module 210, the portion of the first electrical wire section A410 is configured on the outer side of cleaning module and the remaining portion thereof is configured on the front side of cleaning module. Thus, the setting of the assembly in the cleaning module 210 is facilitated. The electrical wire A400 is also convenient for being integrally arranged. The side of the cleaning module 210 away from the wall is the front side thereof. The side thereof close to the wall is the rear side. The side of the heat exchanger close to the indoor unit is the inner side. And the side of the heat exchanger away from the indoor unit is the outer side. In addition, the space corresponding to the front side of the cleaning module 210 is relatively abundant. The front side space of the cleaning module 210 can be fully utilized.

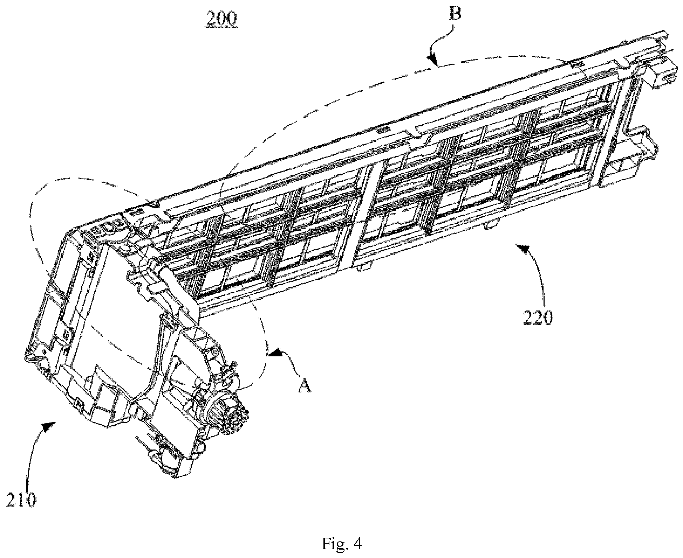

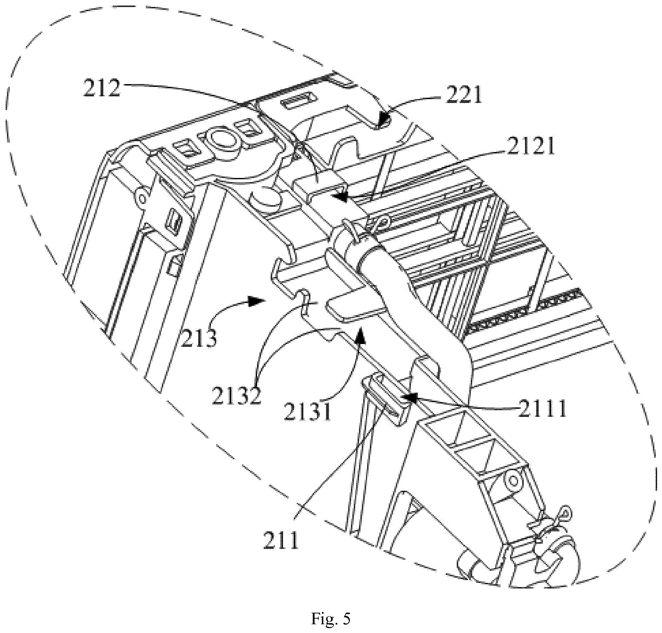

Specifically, referring to FIG 4 and FIG 5, a first clamping line member 211 at the outer side of the cleaning module 210 and a second clamping line member 212 at the front side of the cleaning module 210. The first electrical wire section A410 is penetrated through the first clamping line member 211 and the second clamping line member 212. In the present embodiment, the first clamping line member 211 is a structure for forming a limit to the first electrical wire section A410. Thus various forms can be taken. For example, a restriction form of other electrical wires in the indoor unit is taken. For the second clamping line member 212, the operation is the same as the first clamping line member 211. The first electrical wire section A410 is configured on the outer side and the front side of the cleaning module 210 by the arrangement of the first clamping line member 211 and the second clamping line member 212.

In an embodiment of the invention, referring to FIG 4 and FIG 5, the second clamping line member 212 is adjacent to the filter screen rail module 220, to force the first electrical wire section A410 and the second electrical wire section A420 to bend. In the present embodiment, by such an arrangement thereof, the first electrical wire section A410 and the second electrical wire section A420 are formed in a bent shape, and are corresponded to the joint of the cleaning module 210 and the filter screen rail module 220. Thus, the electrical wire A400 isn't in a state of suspension for coming off the cleaning assembly 200. Thereby the electrical wire A400 is prevented from being squeezed when assembling the indoor unit.

Specifically, referring to FIG 4 and FIG 5, the first clamping line member 211 defines a first through hole 2111, and the first electrical wire section A410 is penetrated through the first through hole 2111;
and/or the second clamping line member 212 defines a second through hole 2121, and the first electrical wire section A410 is penetrated through the second through hole 2121.

In the present embodiment, the first clamping line member 211 is configured as a closed annular structure, and is configured with a first through hole 2111 so that the first through hole 2111 is passed through by the first electrical wire section A410. That is, the first clamping line member 211 is passed through by the first electrical wire section A410. The first electrical wire section A410 is confined within the first through hole 2111 to prevent offset. The same operation is true for the second clamping line member 212, and the details are not repeated herein. The first electrical wire section A410 is configured along the outer side and the front side of the cleaning module 210. And thus the first electrical wire section A410 is in a bent state. The first electrical wire section A410 is prevented from detaching by the arrangement of the first clamping line member 211 and the second clamping line member 212.

Further, referring to FIG 4 and FIG 5, a third clamping line member 213 is provided at the front side of the cleaning module 210, and the second clamping line member 212 and the third clamping line member 213 are arranged at intervals from top to bottom along a height direction of the cleaning module 210. The first electrical wire section A410 is further penetrated through the third clamping line member 213. In the present embodiment, the third clamping line member 213 is a structure for forming a limit to the first electrical wire section A410. Thus various forms can be employed. For example, the height direction of the cleaning module 210 is exemplified by the state in which the indoor unit is suspended from the wall. The cleaning module 210 is configured with a certain height. Thus, the first electrical wire section A410 located on the front side of the cleaning module 210 is effectively fixed to prevent the first electrical wire section A410 from being partially suspended by configuring at intervals the second card portion 212 and the third card portion 213.

Specifically, referring to FIG 4 and FIG 5, the third clamping line member 213 defines an electrical wire penetrating cavity 2131 and an opening 2132 communicating with the electrical wire penetrating cavity 2131, and a portion of the first electrical wire section A410 is inserted into the electrical wire penetrating cavity 2131 through the opening 2132. In this embodiment, the third clamping line member 213 is not a closed annular structure and is configured with an electrical wire penetrating cavity 2131. A portion of the first electrical wire section A410 is inserted into the electrical wire penetrating cavity 2131 through the opening 2132 such that the first electrical wire section A410 as a whole is in a state of passing through the third clamping line member 213. After the first electrical wire section A410 passes through the first clamping line member 211 or the second clamping line member 212, the portion of the first electrical wire section A410 is inserted into the third clamping line member 213. Thereby the assembly efficiency of the first electrical wire section A410 is improved. Moreover, since the first clamping line member 211 and the second clamping line member 212 have a closed annular structure, the first electrical wire section A410 is not easily separated from the first clamping line member 211 and the second clamping line member 212. The arrangement efficiency of the first electrical wire section A410 is improved on the premise of guaranting the fixing effect of the electrical wire section A410.

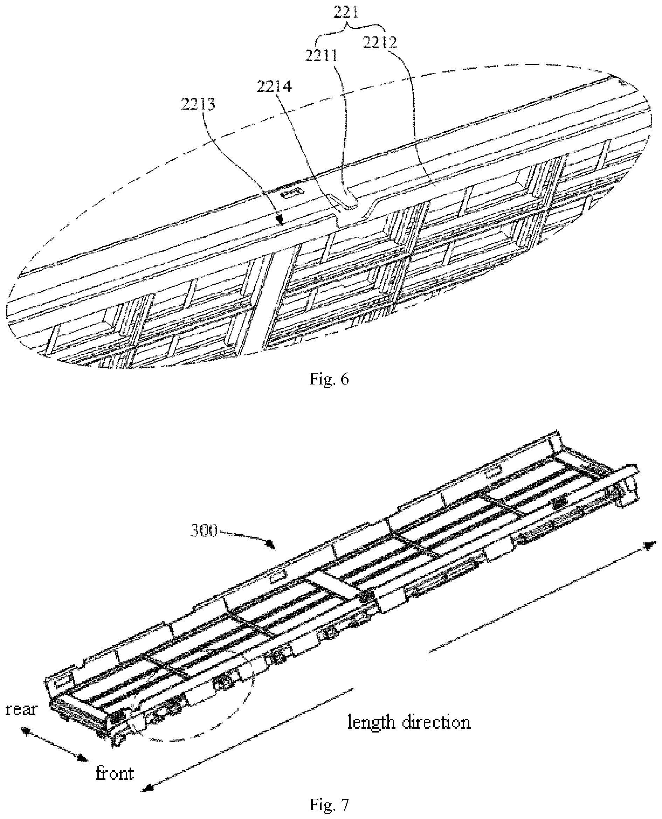

In an embodiment of the present invention, referring to FIG. 4 and FIG. 6, the electrical wire A400 includes: a first electrical wire section A410 arranged at the cleaning module 210 and a second electrical wire section A420 arranged at the filter screen rail module 220.

The second electrical wire section A420 is arranged at the front side of the filter screen rail module 220. The indoor unit is hanged on a wall. The front side of the filter screen rail module 220 is away from the wall. In the present embodiment, as the portion of the first electrical wire section A410 is configured on the front side of the cleaning module 210, the utilization rate of space is also improved by the arrangement of the second electrical wire section A420 on the front side of the filter screen rail module 220. Thus the length of the electrical wire is minimized.

Specifically, referring to FIG 6, a fourth clamping line member 221 is provided at the front side of the filter screen rail module 220. Said fourth clamping line member 221 is simply referred to as "clamping line member" in the claims, without any ordinal numeral before. The second electrical wire section A420 is penetrated through the fourth clamping line member 221. The fourth clamping line member 221 is a structure for forming a limit to the second electrical wire section A420. Thus various forms can be employed. When the fourth electrical wire portion 221 is passed through the second electrical wire section A420, the second electrical wire section A420 is confined to the fourth electrical wire portion 221. Thereby the placement of the second electrical wire section A420 in the filter screen rail module 220 is achieved. With the arrangement of the first electrical wire section A410 and the above structure, the electrical wire A400 can be quickly configured in the cleaning assembly 200.

In an embodiment of the present invention, referring to FIG 6, the fourth clamping line member 221 defines: an electrical wire penetrating groove 2213 arranged along a length direction of the filter screen rail module 220 and an opening 2214 communicating with the electrical wire penetrating groove 2213. Herein at least a part of the second electrical wire section A420 is inserted into the electrical wire penetrating groove 2213 through the opening 2214. In the present embodiment, the electrical wire penetrating groove 2213 is a space for accommodating the second electrical wire section A420. The electrical wire penetrating groove 2213 is configured along the length direction of the filter screen rail module 220 so that the second electrical wire section A420 generally isn't configured with a bend. Thus, the second electrical wire section A420 is inserted into the electrical wire penetrating groove 2213 through the opening 2214. The second electrical wire section A420 is in a state of passing through the fourth clamping line member 221. If the length of the electrical wire penetrating groove 2213 is long, the second electrical wire section A420 may be almost completely inserted into the electrical wire penetrating groove 2213. The end of the second electrical wire section A420 is connected to the electric control box. If the length of the electrical wire penetrating groove 2213 is small, a portion of the second electrical wire sections A420 is inserted into the electrical wire penetrating groove.

Specifically, referring to FIG 6, the fourth clamping line member 221 includes: a first limit element 2211, and a second limit element 2212. The number of the first limit element 2211 is at least two, and the two first limit elements 2211 and the second limit element 2212 are alternatively at intervals. The electrical wire penetrating groove 2213 and the opening 2214 connected to the electrical wire penetrating groove 2213 are defined between each first limit element 2211 and each second limit element 2212 and the electrical wire penetrating groove 2213 is connected to the opening 2214. At least a part of the second electrical wire section A420 is inserted into the electrical wire penetrating groove 2213 through the opening 2214.

In an embodiment of the present invention, referring to FIG. 6, the second limit elements 2212 are arranged along the length direction of the filter screen rail module 220. At least a part of the second electrical wire section A420 is supported by the second limit element 2212. In the present embodiment, the second electrical wire section A420 is configured with a tendency to fall downward under the action of gravity. The second limit element 2212 is configured along the length direction of the filter screen rail module 220. That is, the second limit element 2212 is configured with a certain length. At least a portion of the second electrical wire section A420 is supported by the second limit element 2212 so that the arrangement of the second electrical wire section A420 is more stable.

In an embodiment of the present invention, referring to FIG 1, the cleaning module 210 is connected to one end of the filter screen rail module 220, and the electrical control box is adjacent to another end of the filter screen rail module 220. In this embodiment, the cleaning module 210 is located at one end of the filter screen rail module 220. The electrical control box is adjacent to another end of the filter screen rail module 220. The heat exchanger and the air duct assembly are located between the cleaning module 210 and the electrical control box. Thus, the space of the indoor unit can be fully utilized.

The indoor unit further includes a face frame (not shown) covering the cleaning assembly 200, and the cleaning assembly 200 is detachable from the face frame.

In this embodiment, the face frame is configured with an air inlet. The filter screen rail module 220 is located at the air inlet. The air passes through the air opening, that is, the air passes through the filter screen rail module 220. The air is filtered by the filter screen located in the filter screen rail module. The cleaning assembly is detachable relative to the face frame such that the cleaning assembly 200 is a separate functional assembly and the function of the cleaning assembly 200 can be tested before assembling the indoor unit. Further, the electrical wire A400 is configured on the cleaning assembly 200 (the cleaning module 210 and the filter screen rail module 220). Thus, the arrangement of the electrical wire A400 can be realized before the assembly of the indoor unit and the cleaning assembly 200 can be prevented from being installed in the air conditioner. The arrangement of the electrical wire A400 is avoided to be realized only after the cleaning assembly 200 being installed in the chassis of the indoor unit. The assembly efficiency is further improved.

In other embodiments not part of the present invention, referring to FIG 7 to FIG 11, the indoor unit includes:
A first electrical wire 110 extending towards the electrical control box, and one end of the first electrical wire 110 is connected to the cleaning module, and another end of the first electrical wire 110 includes a first connecting terminal B210;
a second electrical wire 120 extending towards the cleaning module, and one end of the second electrical wire 120 is connected to the electric control box, and another end of the second electrical wire 120 includes a second connecting terminal B220; and
an air intake grill 300 arranged between the cleaning module and the electrical control box, the first connecting terminal B210 is connected to the second connecting terminal B220 to define a connector B200, and the connector B200 is fixed on the air intake grill 300.

The air intake grill 300 is configured at the air inlet of the indoor unit and the filter screen is configured on the air intake grill 300. The air is circulated in the process of operating the conditioner indoor unit. The air is filtered by the filter screen when passing through the air intake grill 300. After the indoor unit is used for a long time, the filter screen is easy to collect dust, batt or the like. So the filter screen is cleaned by setting the cleaning module.

The cleaning module is located at one end of the air intake grill 300. The cleaning module includes a cleaning box, a cleaning structure, a driving structure, and an electric device. The electric device includes a motor, a water pump, a drain valve, or the like. The cleaning box is configured with a water cavity. The movement of the filter screen is driven by the driving structure which is driven by the motor. The cleaning structure is driven to clean the filter screen. The dirt on the filter screen is separated from the filter screen and dropped into the water cavity. The water is pumped by the water pump, and then that is mixed with the dirt to become the dirty water. The drain valve is controlled to dewater the dirty water.

In order to carry out the control of the cleaning module, the electric device of the cleaning module needs to be electrically connected to the electric control box. So the first electrical wire 110 is necessary to be configured. One end of the first electrical wire 100 is connected with the electric device of the cleaning module. And another end of the first electrical wire is configured with the first connecting terminal B210. The electric control box and the cleaning module are configured at intervals. The electric control box is configured at another end of the air intake grill 300. The electric control box is configured with a second electrical wire 120. The end of the second electrical wire 120 is configured with a second connecting terminal B220. The first electrical wire 110 extends toward the electric control box. The second electrical wire 120 extends toward the cleaning module so that the first connecting terminal B210 and the second connecting terminal B220 are connected to be the connector B200. The connector B200 is fixed on the air intake grill 300. Since the control box is used as the control center of the indoor unit, which is needed to be electrically connected with other assemblies. That is, the area where the control box is located is configured with more connecting terminals. In this embodiment, the second electrical wire 120 extends toward the cleaning module. That is, the second connecting terminal B220 is away from the electric control box. The second connecting terminal B220 and the first connecting terminal B210 are connected to be the connector B200. That is, the first connecting terminal B210 is also away from the electric control box. Thus the number of connecting terminal of the area where the electric control box is located is reduced. The messy connecting terminals are avoided. Thereby the management of electrical wire is facilitated. The electromagnetic interference is also reduced to some extent by reducing the number of connecting terminals in the area where the electric control box is located.

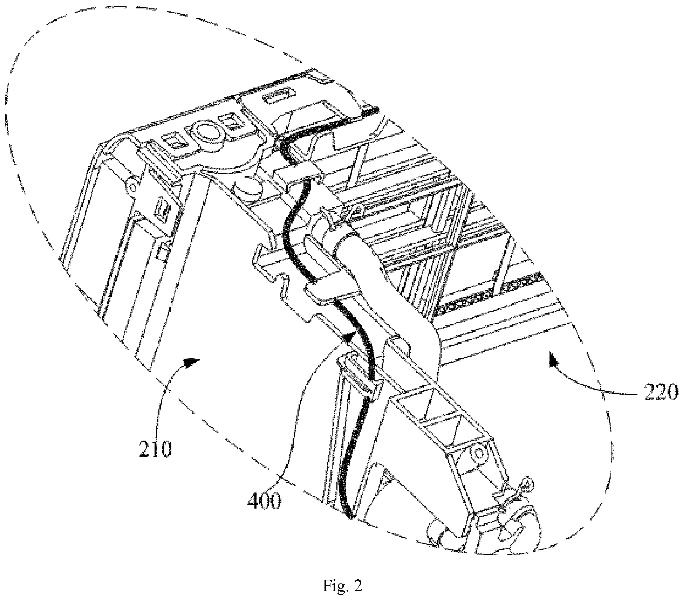

The connector B200 is fixed on the air intake grill 300 so that the connector B200 is effectively fixed. But the connector B200 is connected by the first connecting terminal B210 and the second connecting terminal B220 (for example, the electrical connection between the electrical wire 110 and the second electrical wire 120 is achieved by slot-plug fit). The first electrical wire 110, the first connecting terminal B210, the second connecting terminal B220, and the second electrical wire 120 are effectively fixed as a whole. In an embodiment of the present invention referring to FIG. 1 and FIG. 2, at least a part of the first electrical wire 110 is fixed on the air intake grill 300 and at least a part of the second electrical wire 120 is fixed on the air intake grill 300. In this embodiment, at least a portion of the first electrical wires 110 is fixed on the air intake grill 300 and at least a portion of the second electrical wires 120 is fixed on the air intake grill 300 so that the first electrical wires 110, the first connecting terminal B210, and the second connecting terminal B220 and the second electrical wire 120 are effectively fixed as a whole.

The first electrical wire 110 includes a first electrical wire section and a second electrical wire section. The first electrical wire section of the first electrical wire 110 is taken out from the cleaning module and the second electrical wire section of the first electrical wire 110 is fixed on the air intake grill 300. The second electrical wire 120 includes the first electrical wire section and the second electrical wire section. The first electrical wire section of the second electrical wire 120 is taken out from the electric control box. The second electrical wire section of the second electrical wire 120 is fixed on the electric grille 300. The second electrical wire section of the first electrical wire 110 is configured with a first connecting terminal B210. The second electrical wire section of the second electrical wire 120 is configured with the second connecting terminal B220. The first connecting terminal B210 and the second connecting terminal B220 are connected to be connector B200.

In an embodiment of the present invention referring to FIG 1, the connector B200 is fixed on a front side of the air intake grill 300, and at least the part of the first electrical wire 110 is fixed on the front side of the air intake grill 300. At least the part of the second electrical wire 120 is fixed on the front side of the air intake grill 300. After the indoor unit is hanged on a wall, the front side of the air intake grill 300 is away from the wall, and a rear side of the air intake grill 300 is adjacent to the wall. In the present embodiment, when the indoor unit is assembled, the rear side of the air intake grill 300 abuts against the chassis. The connector B200, at least a portion of the first electrical wire 110, and at least a portion of the second electrical wire 120 are fixed on the front side of the air intake grill 300. The installation work is easily performed for workers.

In an embodiment of the present invention referring to FIG 2 to FIG 5, the front side of the air intake grill 300 includes: a plurality of first limit elements 410 arranged at intervals along a length direction of the air intake grill 300, and a plurality of second limit elements 420, and each second limit element is arranged between each two adjacent first limit elements 410. A receiving cavity 401 and an opening 402 communicating with the receiving cavity 401 are configured by each first limit element 410 and each second limit element 420. The connector B200 is inserted into the receiving cavity 401 through the opening 402. At least the part of the first electrical wire 110 is inserted into the receiving cavity 401 through the opening 402, and at least the part of the second electrical wire 120 is inserted into the receiving cavity 401 through the opening 402.

In this embodiment, referring to FIG 3, the receiving cavity 401 extends along the length direction of the air intake grill 300. The receiving cavity 401 and the opening 402 are the space defined by the first limit element 410 and the second limit element 420. After the connector B200, at least a portion of the first electrical wire 110, and at least a portion of the second electrical wire 120 are inserted into the receiving cavity 401. The connector B200, at least a portion of the first electrical wire 110 and at least a portion of the second electrical wire 120 are defined by the first limit element 410 and the second limit element 420 to avoid dropping of the electrical wire. The first electrical wire 110 and the second electrical wire 120 are integrally long after the docking. Thus the opening 402 is provided in the embodiment. The first electrical wire 110 and the second electrical wire 120 are integrated as a whole, and can be inserted into the receiving cavity 401 through the opening 402. Thus the installing work is more convenient.

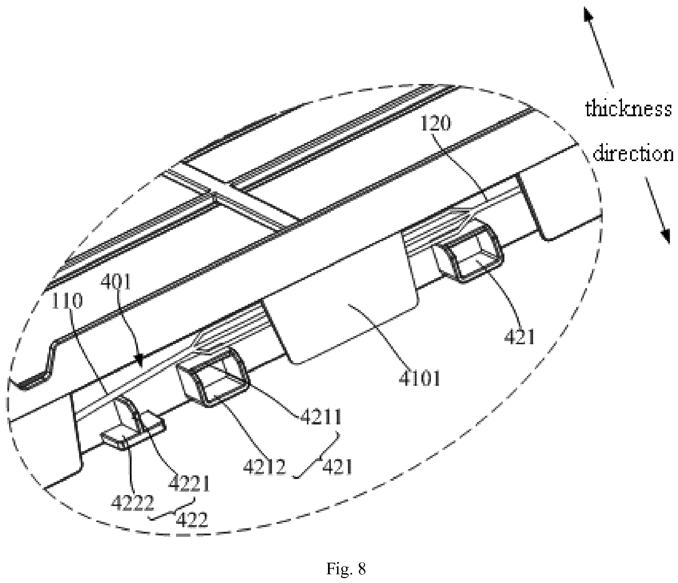

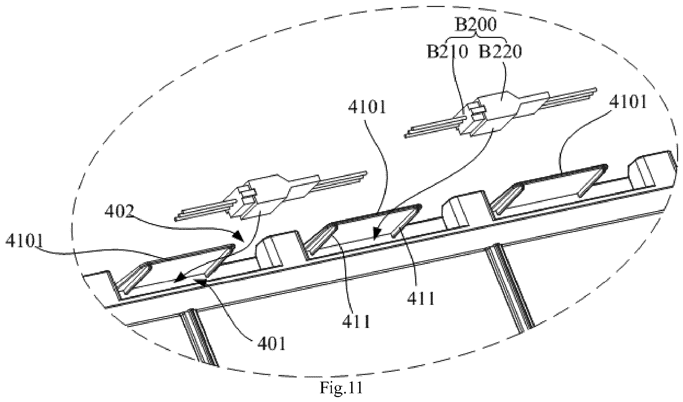

In an embodiment not part of the present invention referring to FIG. 8 and FIG 11, the first limit element 410 is extended along a thickness direction of the air intake grill 300, and the connector B200 is arranged on an inner side of the first limit element 410 which is adjacent to the receiving cavity 401. In this embodiment, the first limit element 410 extends along the thickness direction of the air intake grill 300. When the indoor unit is in the wall-hanging state, the first limit element 410 extends in the up and down directions so that the forward and backward movement of the entirety after being connected by the first electrical wire 110 and the second electrical wire 120 to the indoor unit is prevented.

In an embodiment not part of the present invention referring to FIG 11, the inner side of the first limit element 410 is provided with at least two limiting ribs 411, the at least two limiting ribs 411 are arranged at intervals along the length direction of the air intake grill 300, and the connector B200 is arranged between the two limiting ribs 411. In the embodiment, the connector B200 is placed between the two limiting ribs 411 by configuring the limiting rib 411 so that the connector B200 can be prevented from reciprocating along the length direction of the air intake grill 300. Thereby the connector B200 is better limited.

In an embodiment not part of the present invention referring to FIG 7 and FIG 8, at least the part of the first electrical wire 110 is supported by the second limit element 420. At least the part of the second electrical wire 120 is supported by the second limit element. In this embodiment, the second limit element 420 is protruded toward the front of the air intake grill 300. The second limit element 420 is configured to support the first electrical wire 110 and the second electrical wire 120. After the first electrical wire 110 and the second electrical wire 110 being connected, they are inserted into the receiving cavity 401, and supported by the second limit element 420 under the action of gravity.

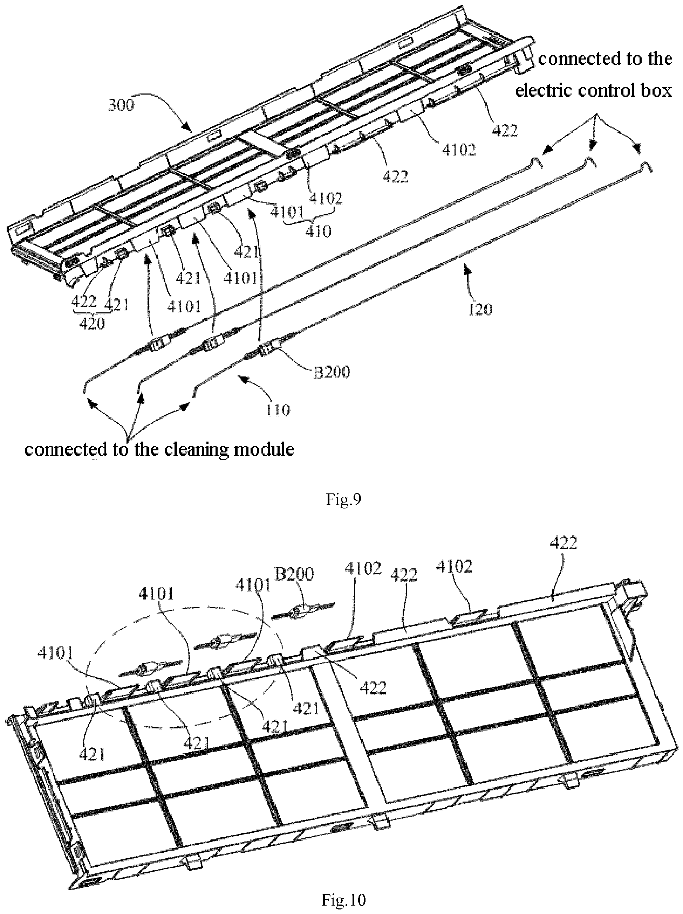

In an embodiment not part of the present invention referring to FIG 8 and FIG 9, one first limit element 410 with the connector B200 on the inner side is defined as a connector limit element 4101, and remaining first limit elements 410 are defined as non-connector limit elements 4102.

One second limit element 420 adjacent to the connector limit element 4101 is defined as a bearing element 421, and one second limit element 420 adjacent to the non-connector limit elements 4102 is defined as a supporting member 422.

The bearing element 421 includes a first bearing element 4211 in a plate shape and arranged horizontally, and a second bearing element 4212 fixed with the first bearing element 4211, and at least the part of the first electrical wire 110 and at least the part of the second electrical wire 120 are supported by the first bearing element 4211.

The supporting element 422 includes a first supporting part 4221 in a plate shape and arranged horizontally, and a second supporting part 4222 fixed with the first supporting element 4221, and at least the part of the first electrical wire 110 and at least the part of the second electrical wire 120 is supported by the first supporting element 4221.

In this embodiment, the connector B200 is needed to be inserted into the inner side of the connector limit element 4101 through the opening 402. The bearing element 421 is configured adjacent to the connector limit element 4101. The bearing element 421 is configured with the first bearing element 4211 that is in a plate shape and longitudinally configured. The contact area between the first bearing element 4211 and the electrical wire in the vicinity of the connector B200 is increased so that the fixing of the connector B200 is more stable. The non-connector limit element 4102 does not need to be configured with the connector B200. Therefore, the supporting member 422 is configured to include a first supporting member 4221 and a second supporting member 4222. The first supporting member 4221 is a plate shape and longitudinally configured. The operating space when embedding the electrical wire is increased. The assembly is facilitated.

In an embodiment of the present invention, the indoor unit includes a face frame (not shown). The face frame has an air inlet. The air intake grill 300 is arranged at the air inlet, and the air intake grill 300 is separable from the face frame. In this embodiment, the air intake grill 300 is separable relative to the face frame. Therefore, before the indoor unit is assembled, the air intake grill 300 and the filter screen can be separately assembled to avoid the need to fit the face frame to assemble the filter screen.

The present invention also provides an air conditioner including an air conditioner outdoor unit and the indoor unit of any one of the above embodiments.

The indoor unit is defined in claim 1. In particular, it includes:
a first electrical wire 110 extending towards the electrical control box, and one end of the first electrical wire 110 is connected to the cleaning module, and another end of the first electrical wire 110 includes a first connecting terminal B210;
a second electrical wire 120 extending towards the cleaning module, and one end of the second electrical wire 120 is connected to the electric control box, and another end of the second electrical wire 120 includes a second connecting terminal B220; and
an air intake grill 300 arranged between the cleaning module and the electrical control box, the first connecting terminal B210 is connected to the second connecting terminal B220 to define a connector B200, and the connector B200 is fixed on the air intake grill 300.

The air conditioner outdoor unit may be an air conditioner outdoor unit in the prior art, which constitutes a refrigerant circulation with the indoor unit.

The structure of the indoor unit of the present embodiment can be as described in the above embodiments of the invention. Since the structure of the indoor unit of the present embodiment adopts the technical solution of the above embodiments of the invention, at least the beneficial effects of the technical solutions of the above embodiments are obtained, and not be repeated here.

The present invention also provides an air conditioner including an air conditioner outdoor unit and the indoor unit of any one of the above embodiments.

The indoor unit is as defined in claim 1. In particular, it includes:
An electric control box (not shown);
a cleaning assembly 200 including: a filter screen rail module 220; and a cleaning module 210 configured to drive a filter screen to move on the filter screen rail module 220 to clean the filter screen, and including an electrical wire connecting end (not shown in the figure); and
an electrical wire A400 arranged on the cleaning module 210 and the filter screen rail module 220, and one end of the electrical wire A400 is connected to the electrical wire connecting end. The other end of the electrical wire A400 is connected to the electric control box.

The specific structure of the indoor unit of the present embodiment can be as described in the above embodiments of the invention. Since the structure of the indoor unit of the present embodiment adopts the technical solution of the above embodiments of the invention, at least the beneficial effects of the technical solutions of the above embodiments are obtained, and not be repeated here. The refrigerant circulation is realized between the air conditioner outdoor unit and the indoor unit. The specific structure of the air conditioner outdoor unit can be referred to the air conditioner outdoor unit in the prior art, and not be repeated.

## Claims

1. An indoor unit of an air conditioner, comprising:
an electric control box; and
a cleaning assembly (200) comprising:
a filter screen rail module (220); and
a cleaning module (210) configured to drive a filter screen to move on the filter screen rail module (220) to clean the filter screen, and comprising an electrical wire (A400) connecting end; and
an electrical wire (A400), wherein one end of the electrical wire (A400) is connected to the electrical wire connecting end, and the other end of the electrical wire is connected to the electric control box,
**characterized in that** the electrical wire (A400) is arranged on the cleaning module (210) and the filter screen rail module (220),
wherein the electrical wire (A400) comprises:
a first electrical wire section (A410) arranged at the cleaning module (210); and
a second electrical wire section (A420) arranged at the filter screen rail module (220);
wherein the second electrical wire section (A420) is arranged at a front side of the filter screen rail module (220);
wherein the indoor unit is configured so that when it is hanged on a wall, the front side of the filter screen rail module (220) is away from the wall,
wherein the indoor unit further comprises a clamping line member (221) disposed at the front side of the filter screen rail module (220), wherein the second electrical wire section (A420) is penetrated through the clamping line member (221),
wherein the clamping line member (221) defines: an electrical wire penetrating groove (2213) arranged along a length direction of the filter screen rail module (220); and an opening (2214) communicating with the electrical wire penetrating groove (2213); wherein the indoor unit is configured so that at least a part of the second electrical wire section (A420) can be inserted into the electrical wire penetrating groove (2213) through the opening (2214).

2. The indoor unit of claim 1,
wherein the first electrical wire section (A410) is arranged along a height direction of the cleaning module (210); and/or
wherein the second electrical wire section (A420) is arranged along a length direction of the filter screen rail module (220).

3. The indoor unit of any one of claims 1 to 2,
wherein the first electrical wire section (A410) is arranged at an outer side and a front side of the cleaning module (210);
wherein the indoor unit is configured so that when it is hanged on a wall, the front side of the cleaning module (210) is away from the wall, and the outer side of the cleaning module (210) is away from a heat exchanger of the indoor unit.

4. The indoor unit of claim 3, further comprising:
a first clamping line member (211) at the outer side of the cleaning module (210); and
a second clamping line member (212) at the front side of the cleaning module (210), wherein the first electrical wire section (A410) is penetrated through the first clamping line member (211) and the second clamping line member (212).

5. The indoor unit of claim 4,
wherein the second clamping line member (212) is adjacent to the filter screen rail module (220), to force the first electrical wire section (A410) and the second electrical wire section (A420) to bend; or
wherein the first clamping line member (211) defines a first through hole (2111), and the first electrical wire section (A410) is penetrated through the first through hole (2111); and/or,
wherein the second clamping line member (212) defines a second through hole (2121), and the first electrical wire section (A410) is penetrated through the second through hole (2121); or
the indoor unit further comprises a third clamping line member (213) at the front side of the cleaning module (210), and the second clamping line member (212) and the third clamping line member (213) are arranged at intervals from top to bottom along a height direction of the cleaning module (210), and
wherein the first electrical wire section (A410) is further penetrated through the third clamping line member (213).

6. The indoor unit of claim 1, wherein the clamping line member (221) comprises: at least two first limit elements (2211) ; and a second limit element (2212); wherein the at least two first limit elements (2211) and the second limit element (2212) are alternatively arranged at intervals; wherein the electrical wire penetrating groove (2213) and the opening (2214) connected to the electrical wire penetrating groove (2213) are defined between each first limit element (2211) and each second limit element (2212); and wherein the indoor unit is configured so that at least a part of the second electrical wire section (A420) can be inserted into the electrical wire penetrating groove (2213) through the opening.

7. The indoor unit of any one of claims 1 to 6,
wherein the cleaning module (210) is connected to one end of the filter screen rail module (220), and the electrical control box is adjacent to another end of the filter screen rail module (220); and/or
wherein the indoor unit further includes a face frame covering the cleaning assembly (200), and the cleaning assembly (200) is detachable from the face frame.

8. The indoor unit of any one of claims 1 to 7, wherein further comprising:
a first electrical wire (110) extending towards the electrical control box, wherein one end of the first electrical wire (110) is connected to the cleaning module (210), and another end of the first electrical wire (110) comprises a first connecting terminal (B210);
a second electrical wire (120) extending towards the cleaning module (210), wherein one end of the second electrical wire (120) is connected to the electric control box, and another end of the second electrical wire (120) comprises a second connecting terminal (B220); and
an air intake grill (300) arranged between the cleaning module (210) and the electrical control box, the first connecting terminal (B210) is connected to the second connecting terminal (B220) to define a connector (B200), and the connector (B200) is fixed on the air intake grill (300).

9. The indoor unit of claim 8,
wherein at least a part of the first electrical wire (110) is fixed on the air intake grill (300), and at least a part of the second electrical wire (120) is fixed on the air intake grill (300),.

10. The indoor unit of claim 9,
wherein the connector (B200) is fixed on a front side of the air intake grill (300), and at least the part of the first electrical wire (110) is fixed on the front side of the air intake grill (300);
wherein at least the part of the second electrical wire (120) is fixed on the front side of the air intake grill (300); and
wherein the indoor unit is configured so that after it being hanged on a wall, the front side of the air intake grill (300) is away from the wall, and a rear side of the air intake grill (300) is adjacent to the wall.

11. The indoor unit of claim 10,
wherein the front side of the air intake grill (300) comprises:
a plurality of first limit elements (410) arranged at intervals along a length direction of the air intake grill (300), and
a plurality of second limit elements (420), wherein each second limit element (420) is arranged between each two adjacent first limit elements (410);
wherein a receiving cavity (401) and an opening (402) communicating with the receiving cavity (401) are configured by each first limit element (410) and each second limit element (420);
wherein the indoor unit is configured so that the connector (B200) can be inserted into the receiving cavity (401) through the opening (402); and
wherein the indoor unit is configured so that at least the part of the first electrical wire (110) can be inserted into the receiving cavity (401) through the opening (402), and the indoor unit is configured so that at least the part of the second electrical wire (120) can be inserted into the receiving cavity (401) through the opening (402).

12. The indoor unit of any one of claims 8 to 11, further comprising:
a face frame having an air inlet,
wherein the air intake grill (300) is arranged at the air inlet, and the air intake grill (300) is separable from the face frame.

13. An air conditioner, wherein the air conditioner comprising an outdoor unit and the indoor unit according to any one of claims 1 to 12.

## Patentansprüche

1. Inneneinheit einer Klimaanlage, umfassend:
einen Elektroschaltkasten; und
eine Reinigungsanordnung (200), umfassend:
ein Filtersiebschienenmodul (220); und
ein Reinigungsmodul (210), das dazu konfiguriert ist, ein Filtersieb dazu anzutreiben, sich auf dem Filtersiebschienenmodul (220) zu bewegen, um das Filtersieb zu reinigen, und das ein Anschlussende für einen Elektrodraht (A400) umfasst; und
einen Elektrodraht (A400), wobei ein Ende des Elektrodrahts (A400) mit dem Anschlussende für den Elektrodraht verbunden ist und das andere Ende des Elektrodrahts mit dem Elektroschaltkasten verbunden ist,
**dadurch gekennzeichnet, dass** der Elektrodraht (A400) an dem Reinigungsmodul (210) und dem Filtersiebschienenmodul (220) angeordnet ist,
wobei der Elektrodraht (A400) Folgendes umfasst:
einen ersten Elektrodrahtabschnitt (A410), der an dem Reinigungsmodul (210) angeordnet ist; und
einen zweiten Elektrodrahtabschnitt (A420), der an dem Filtersiebschienenmodul (220) angeordnet ist;
wobei der zweite Elektrodrahtabschnitt (A420) an einer Vorderseite des Filtersiebschienenmoduls (220) angeordnet ist;
wobei die Inneneinheit derart konfiguriert ist, dass, wenn sie an einer Wand aufgehängt ist, die Vorderseite des Filtersiebschienenmoduls (220) von der Wand entfernt ist,
wobei die Inneneinheit ferner ein Klemmleistenelement (221) umfasst, das an der Vorderseite des Filtersiebschienenmoduls (220) angeordnet ist, wobei der zweite Elektrodrahtabschnitt (A420) durch das Klemmleistenelement (221) hindurchgeführt ist,
wobei das Klemmleistenelement (221) Folgendes definiert: eine Elektrodrahtdurchführungsnut (2213), die entlang einer Längenrichtung des Filtersiebschienemoduls (220) angeordnet ist; und eine Öffnung (2214), die mit der Elektrodrahtdurchführungsnut (2213) in Verbindung steht; wobei die Inneneinheit derart konfiguriert ist, dass mindestens ein Teil des zweiten Elektrodrahtabschnitts (A420) durch die Öffnung (2214) in die Elektrodrahtdurchführungsnut (2213) gesteckt werden kann.

2. Inneneinheit nach Anspruch 1,
wobei der erste Elektrodrahtabschnitt (A410) entlang einer Höhenrichtung des Reinigungsmoduls (210) angeordnet ist; und/oder
wobei der zweite Elektrodrahtabschnitt (A420) entlang einer Längenrichtung des Filtersiebschienenmoduls (220) angeordnet ist.

3. Inneneinheit nach einem der Ansprüche 1 bis 2,
wobei der erste Elektrodrahtabschnitt (A410) an einer Außenseite und einer Vorderseite des Reinigungsmoduls (210) angeordnet ist;
wobei die Inneneinheit derart konfiguriert ist, dass, wenn sie an einer Wand aufgehängt ist, die Vorderseite des Reinigungsmoduls (210) von der Wand entfernt ist und die Außenseite des Reinigungsmoduls (210) von einem Wärmetauscher der Inneneinheit entfernt ist.

4. Inneneinheit nach Anspruch 3, ferner umfassend:
ein erstes Klemmleistenelement (211) auf der Außenseite des Reinigungsmoduls (210); und
ein zweites Klemmleistenelement (212) auf der Vorderseite des Reinigungsmoduls (210), wobei der erste Elektrodrahtabschnitt (A410) durch das erste Klemmleistenelement (211) und das zweite Klemmleistenelement (212) hindurchgeführt ist.

5. Inneneinheit nach Anspruch 4,
wobei das zweite Klemmleistenelement (212) dem Filtersiebschienenmodul (220) benachbart ist, um den ersten Elektrodrahtabschnitt (A410) und den zweiten Elektrodrahtabschnitt (A420) dazu zu zwingen, sich zu biegen; oder
wobei das erste Klemmleistenelement (211) ein erstes Durchgangsloch (2111) definiert und der erste Elektrodrahtabschnitt (A410) durch das erste Durchgangsloch (2111) hindurchgeführt ist; und/oder
wobei das zweite Klemmleistenelement (212) ein zweites Durchgangsloch (2121) definiert und der erste Elektrodrahtabschnitt (A410) durch das zweite Durchgangsloch (2121) hindurchgeführt ist; oder
die Inneneinheit ferner ein drittes Klemmleistenelement (213) auf der Vorderseite des Reinigungsmoduls (210) umfasst und das zweite Klemmleistenelement (212) und das dritte Klemmleistenelement (213) in Abständen von oben nach unten entlang einer Höhenrichtung des Reinigungsmoduls (210) angeordnet sind, und
wobei der erste Elektrodrahtabschnitt (A410) weiter durch das dritte Klemmleistenelement (213) hindurchgeführt ist.

6. Inneneinheit nach Anspruch 1, wobei das Klemmleistenelement (221) Folgendes umfasst: mindestens zwei erste Begrenzungselemente (2211); und ein zweites Begrenzungselement (2212); wobei die mindestens zwei ersten Begrenzungselemente (2211) und das zweite Begrenzungselement (2212) abwechselnd in Abständen angeordnet sind; wobei die Elektrodrahtdurchführungsnut (2213) und die mit der Elektrodrahtdurchführungsnut (2213) verbundene Öffnung (2214) zwischen jedem ersten Begrenzungselement (2211) und jedem zweiten Begrenzungselement (2212) definiert sind; und wobei die Inneneinheit derart konfiguriert ist, dass mindestens ein Teil des zweiten Elektrodrahtabschnitts (A420) durch die Öffnung in die Elektrodrahtdurchführungsnut (2213) gesteckt werden kann.

7. Inneneinheit nach einem der Ansprüche 1 bis 6,
wobei das Reinigungsmodul (210) mit einem Ende des Filtersiebschienenmoduls (220) verbunden ist und der Elektroschaltkasten einem anderen Ende des Filtersiebschienenmoduls (220) benachbart ist; und/oder
wobei die Inneneinheit ferner einen Frontrahmen umfasst, der die Reinigungsanordnung (200) abdeckt, und die Reinigungsanordnung (200) von dem Frontrahmen trennbar ist.

8. Inneneinheit nach einem der Ansprüche 1 bis 7, ferner umfassend:
einen ersten Elektrodraht (110), der sich in Richtung des Elektroschaltkastens erstreckt, wobei ein Ende des ersten Elektrodrahts (110) mit dem Reinigungsmodul (210) verbunden ist und ein anderes Ende des ersten Elektrodrahts (110) eine erste Anschlussklemme (B210) umfasst;
einen zweiten Elektrodraht (120), der sich in Richtung des Reinigungsmoduls (210) erstreckt, wobei ein Ende des zweiten Elektrodrahts (120) mit dem Elektroschaltkasten verbunden ist und ein anderes Ende des zweiten Elektrodrahts (120) eine zweite Anschlussklemme (B220) umfasst; und
ein Luftansauggitter (300), das zwischen dem Reinigungsmodul (210) und dem Elektroschaltkasten angeordnet ist, wobei die erste Anschlussklemme (B210) mit der zweiten Anschlussklemme (B220) verbunden ist, um einen Verbinder (B200) zu definieren, und der Verbinder (B200) an dem Luftansauggitter (300) befestigt ist.

9. Inneneinheit nach Anspruch 8,
wobei mindestens ein Teil des ersten Elektrodrahts (110) an dem Luftansauggitter (300) befestigt ist und mindestens ein Teil des zweiten Elektrodrahts (120) an dem Luftansauggitter (300) befestigt ist.

10. Inneneinheit nach Anspruch 9,
wobei der Verbinder (B200) an einer Vorderseite des Lufteinlassgitters (300) befestigt ist und mindestens der Teil des ersten Elektrodrahts (110) an der Vorderseite des Luftansauggitters (300) befestigt ist;
wobei mindestens der Teil des zweiten Elektrodrahts (120) an der Vorderseite des Luftansauggitters (300) befestigt ist; und
wobei die Inneneinheit derart konfiguriert ist, dass, nachdem sie an einer Wand aufgehängt wurde, die Vorderseite des Luftansauggitters (300) von der Wand entfernt ist und eine Rückseite des Luftansauggitters (300) der Wand benachbart ist.

11. Inneneinheit nach Anspruch 10,
wobei die Vorderseite des Luftansauggitters (300) Folgendes umfasst:
eine Vielzahl von ersten Begrenzungselementen (410), die in Abständen entlang einer Längenrichtung des Luftansauggitters (300) angeordnet sind, und
eine Vielzahl von zweiten Begrenzungselementen (420), wobei die zweiten Begrenzungselemente (420) jeweils zwischen zwei benachbarten ersten Begrenzungselementen (410) angeordnet sind;
wobei ein Aufnahmehohlraum (401) und eine mit dem Aufnahmehohlraum (401) in Verbindung stehende Öffnung (402) durch jedes erste Begrenzungselement (410) und jedes zweite Begrenzungselement (420) konfiguriert sind;
wobei die Inneneinheit derart konfiguriert ist, dass der Verbinder (B200) durch die Öffnung (402) in den Aufnahmehohlraum (401) gesteckt werden kann; und
wobei die Inneneinheit derart konfiguriert ist, dass mindestens der Teil des ersten Elektrodrahts (110) durch die Öffnung (402) in den Aufnahmehohlraum (401) gesteckt werden kann, und die Inneneinheit derart konfiguriert ist, dass mindestens der Teil des zweiten Elektrodrahts (120) durch die Öffnung (402) in den Aufnahmehohlraum (401) gesteckt werden kann.

12. Inneneinheit nach einem der Ansprüche 8 bis 11, ferner umfassend:
einen Frontrahmen mit einem Lufteinlass,
wobei das Luftansauggitter (300) an dem Lufteinlass angeordnet ist und das Luftansauggitter (300) von dem Frontrahmen trennbar ist.

13. Klimaanlage, wobei die Klimaanlage eine Außeneinheit und die Inneneinheit nach einem der Ansprüche 1 bis 12 umfasst.

## Revendications

1. Unité intérieure d'un climatiseur, comportant :
un boîtier de commande électrique ; et
un ensemble de nettoyage (200) comportant :
un module à rail de crépine de filtration (220) ; et
un module de nettoyage (210) configuré pour entraîner une crépine de filtration à des fins de déplacement sur le module à rail de crépine de filtration (220) pour nettoyer la crépine de filtration, et comportant une extrémité de connexion de fil électrique (A400) ; et
un fil électrique (A400), dans laquelle une extrémité du fil électrique (A400) est connectée à l'extrémité de connexion de fil électrique, et l'autre extrémité du fil électrique est connectée au boîtier de commande électrique,
**caractérisée en ce que** le fil électrique (A400) est agencé sur le module de nettoyage (210) et sur le module à rail de crépine de filtration (220),
dans laquelle le fil électrique (A400) comporte :
une première section de fil électrique (A410) agencée au niveau du module de nettoyage (210) ; et
une deuxième section de fil électrique (A420) agencée au niveau du module à rail de crépine de filtration (220) ;
dans laquelle la deuxième section de fil électrique (A420) est agencée au niveau d'un côté avant du module à rail de crépine de filtration (220) ;
dans laquelle l'unité intérieure est configurée de telle sorte que, quand elle est suspendue à une paroi, le côté avant du module à rail de crépine de filtration (220) est éloigné de la paroi,
dans laquelle l'unité intérieure comporte par ailleurs un élément formant ligne de serrage (221) disposé au niveau du côté avant du module à rail de crépine de filtration (220), dans laquelle la deuxième section de fil électrique (A420) est introduite au travers de l'élément formant ligne de serrage (221),
dans laquelle l'élément formant ligne de serrage (221) définit : une rainure d'introduction de fil électrique (2213) agencée le long d'une direction allant dans le sens de la longueur du module à rail de crépine de filtration (220) ; et une ouverture (2214) en communication avec la rainure d'introduction de fil électrique (2213) ; dans laquelle l'unité intérieure est configurée de telle sorte qu'au moins une partie de la deuxième section de fil électrique (A420) peut être insérée dans la rainure d'introduction de fil électrique (2213) au travers de l'ouverture (2214).

2. Unité intérieure selon la revendication 1,
dans laquelle la première section de fil électrique (A410) est agencée le long d'une direction allant dans le sens de la hauteur du module de nettoyage (210) ; et/ou
dans laquelle la deuxième section de fil électrique (A420) est agencée le long d'une direction allant dans le sens de la longueur du module à rail de crépine de filtration (220).

3. Unité intérieure selon l'une quelconque des revendications 1 à 2,
dans laquelle la première section de fil électrique (A410) est agencée au niveau d'un côté extérieur et d'un côté avant du module de nettoyage (210) ;
dans laquelle l'unité intérieure est configurée de telle sorte que, quand elle est suspendue à une paroi, le côté avant du module de nettoyage (210) est éloigné de la paroi, et le côté extérieur du module de nettoyage (210) est éloigné d'un échangeur de chaleur de l'unité intérieure.

4. Unité intérieure selon la revendication 3, comportant par ailleurs :
un premier élément formant ligne de serrage (211) au niveau du côté extérieur du module de nettoyage (210) ; et
un deuxième élément formant ligne de serrage (212) au niveau du côté avant du module de nettoyage (210), dans laquelle la première section de fil électrique (A410) est introduite au travers du premier élément formant ligne de serrage (211) et du deuxième élément formant ligne de serrage (212).

5. Unité intérieure selon la revendication 4,
dans laquelle le deuxième élément formant ligne de serrage (212) est adjacent par rapport au module à rail de crépine de filtration (220), pour forcer la première section de fil électrique (A410) et la deuxième section de fil électrique (A420) à se plier ; ou
dans laquelle le premier élément formant ligne de serrage (211) définit un premier trou traversant (2111), et la première section de fil électrique (A410) est introduite au travers du premier trou traversant (2111) ; et/ou,
dans laquelle le deuxième élément formant ligne de serrage (212) définit un deuxième trou traversant (2121), et la première section de fil électrique (A410) est introduite au travers du deuxième trou traversant (2121) ; ou
l'unité intérieure comporte par ailleurs un troisième élément formant ligne de serrage (213) au niveau du côté avant du module de nettoyage (210), et le deuxième élément formant ligne de serrage (212) et le troisième élément formant ligne de serrage (213) sont agencés selon des intervalles de haut en bas le long d'une direction allant dans le sens de la hauteur du module de nettoyage (210), et
dans laquelle la première section de fil électrique (A410) est par ailleurs introduite au travers du troisième élément formant ligne de serrage (213).

6. Unité intérieure selon la revendication 1, dans laquelle l'élément formant ligne de serrage (221) comporte : au moins deux premiers éléments de limitation (2211) ; et un deuxième élément de limitation (2212) ; dans laquelle lesdits au moins deux premiers éléments de limitation (2211) et le deuxième élément de limitation (2212) sont agencés de manière alternée selon des intervalles ; dans laquelle la rainure d'introduction de fil électrique (2213) et l'ouverture (2214) connectée à la rainure d'introduction de fil électrique (2213) sont définies entre chaque premier élément de limitation (2211) et chaque deuxième élément de limitation (2212) ; et dans laquelle l'unité intérieure est configurée de telle sorte qu'au moins une partie de la deuxième section de fil électrique (A420) peut être insérée dans la rainure d'introduction de fil électrique (2213) au travers de l'ouverture.

7. Unité intérieure selon l'une quelconque des revendications 1 à 6,
dans laquelle le module de nettoyage (210) est connecté à une extrémité du module à rail de crépine de filtration (220), et le boîtier de commande électrique est adjacent par rapport à une autre extrémité du module à rail de crépine de filtration (220) ; et/ou
dans laquelle l'unité intérieure comprend par ailleurs un cadre de façade recouvrant l'ensemble de nettoyage (200), et l'ensemble de nettoyage (200) est détachable du cadre de façade.

8. Unité intérieure selon l'une quelconque des revendications 1 à 7, l'unité intérieure comporte par ailleurs :
un premier fil électrique (110) s'étendant vers le boîtier de commande électrique, dans laquelle une extrémité du premier fil électrique (110) est connectée au module de nettoyage (210), et une autre extrémité du premier fil électrique (110) comporte une première borne de connexion (B210) ;
un deuxième fil électrique (120) s'étendant vers le module de nettoyage (210), dans laquelle une extrémité du deuxième fil électrique (120) est connectée au boîtier de commande électrique, et une autre extrémité du deuxième fil électrique (120) comporte une deuxième borne de connexion (B220) ; et
une grille d'admission d'air (300) agencée entre le module de nettoyage (210) et le boîtier de commande électrique, la première borne de connexion (B210) est connectée à la deuxième borne de connexion (B220) pour définir un connecteur (B200), et le connecteur (B200) est fixé sur la grille d'admission d'air (300).

9. Unité intérieure selon la revendication 8,
dans laquelle au moins une partie du premier fil électrique (110) est fixée sur la grille d'admission d'air (300), et au moins une partie du deuxième fil électrique (120) est fixée sur la grille d'admission d'air (300).

10. Unité intérieure selon la revendication 9,
dans laquelle le connecteur (B200) est fixé sur un côté avant de la grille d'admission d'air (300), et au moins la partie du premier fil électrique (110) est fixée sur le côté avant de la grille d'admission d'air (300) ;
dans laquelle au moins la partie du deuxième fil électrique (120) est fixée sur le côté avant de la grille d'admission d'air (300) ; et
dans laquelle l'unité intérieure est configurée de telle sorte que, après avoir été suspendue à une paroi, le côté avant de la grille d'admission d'air (300) est éloigné de la paroi, et un côté arrière de la grille d'admission d'air (300) est adjacent par rapport à la paroi.

11. Unité intérieure selon la revendication 10,
dans laquelle le côté avant de la grille d'admission d'air (300) comporte :
une pluralité de premiers éléments de limitation (410) agencés selon des intervalles le long d'une direction allant dans le sens de la longueur de la grille d'admission d'air (300), et
une pluralité de deuxièmes éléments de limitation (420), dans laquelle chaque deuxième élément de limitation (420) est agencé entre chaque deux premiers éléments de limitation adjacents (410) ;
dans laquelle une cavité de réception (401) et une ouverture (402) en communication avec la cavité de réception (401) sont configurées par chaque premier élément de limitation (410) et chaque deuxième élément de limitation (420) ;
dans laquelle l'unité intérieure est configurée de telle sorte que le connecteur (B200) peut être inséré dans la cavité de réception (401) au travers de l'ouverture (402) ; et
dans laquelle l'unité intérieure est configurée de telle sorte qu'au moins la partie du premier fil électrique (110) peut être insérée dans la cavité de réception (401) au travers de l'ouverture (402), et l'unité intérieure est configurée de telle sorte qu'au moins la partie du deuxième fil électrique (120) peut être insérée dans la cavité de réception (401) au travers de l'ouverture (402).

12. Unité intérieure selon l'une quelconque des revendications 8 à 11, comportant par ailleurs :
un cadre de façade ayant une entrée d'air,
dans laquelle la grille d'admission d'air (300) est agencée au niveau de l'entrée d'air, et la grille d'admission d'air (300) est en mesure d'être séparée du cadre de façade.

13. Climatiseur, dans lequel le climatiseur comporte une unité extérieure et l'unité intérieure selon l'une quelconque des revendications 1 à 12.
